# EUROPÄISCHE PATENTSCHRIFT

(11) **EP 3 588 047 B1**
(45) Veröffentlichungstag und Bekanntmachung des Hinweises auf die Patenterteilung: **03.04.2024**
(21) Anmeldenummer: 18180338.8
(22) Anmeldetag: 28.06.2018
(51) Int. Cl.: G01M 3/28, E03B 7/07, F16K 37/00, G01F 1/34, G01F 15/00

(54) **LECKAGESCHUTZ**
LEAKAGE PROTECTION
PROTECTION CONTRE LES FUITES

(43) Veröffentlichungstag der Anmeldung: 01.01.2020
(73) Patentinhaber: Georg Fischer JRG AG, 4450 Sissach (CH)
(72) Erfinder: Bürli, Stephan, 4402 Frenkendorf (CH); Cachot, Philippe, 4450 Sissach (CH)
(74) Vertreter: Fenner, Seraina

(56) Entgegenhaltungen:
- WO-A1-2005/095916
- US-A- 490 684
- US-A- 5 303 738
- US-A1- 2009 194 719
- US-A1- 2014 230 924

## Beschreibung

Die Erfindung betrifft eine Vorrichtung und ein Verfahren zur Durchflussüberwachung in einem Leitungssystem vorzugsweise einem Trinkwasserleitungssystem beinhaltend ein Drosselelement, wobei sich das Drosselelement entsprechend dem Volumenstrom öffnet oder schliesst, wobei das Drosselelement einen Öffnungsschwellwert p_{D} aufweist.

In Leitungssystemen vorzugsweise Trinkwasserleitungssystemen ist es von Vorteil wenn das System auf Leckagen überwacht wird. Dies wird in der Regel über den zu messenden Volumenstrom erreicht, wobei es hier schwierig ist kleine Mengen an Wasserverbrauch auszumachen. Wenn in einem Leitungssystem der Wasserverlust nur tropfenweise erfolgt, ist das über den Volumenstrom nicht wahrnehmbar jedoch können dadurch grosse Schäden entstehen in dem über längere Zeit Wasser aus der Leitung bspw. in die Wand tropft und so grosse Wasserschäden in Gebäuden anrichten kann.

Die EP 3 032 236 A1 offenbart eine Flüssigkeitsströmungsdetektionsvorrichtung zur Überwachung eines Lecks in einem Leitungssystem. Die Vorrichtung weist zwei Bypass-Kanäle auf in denen jeweils ein Kolben mit Magnet angeordnet ist, die sich aufgrund des vorherrschenden Drucks in den Bypass-Kanälen, bei geschlossenem Hauptventil, in der entsprechenden Bypass-Leitung verschieben und der Magnet von einem Magnetsensor detektiert wird, wodurch erkannt wird, dass ein Leck vorliegen könnte.

Nachteilig hierbei ist, dass nur Leckagen ermittelt werden können die einen kleinen Volumenstrom aufweisen und grössere Leckagen werden nicht erkannt da dann der Volumenstrom durch das Hauptventil fliesst und nicht über die Bypass-Kanäle.

US490684, US5330738 und US2014/230924 offenbaren eine Vorrichtung zur Durchflussüberwachung in einem Leitungssystem beinhaltend ein Drosselelement.

Es ist Aufgabe der Erfindung eine Vorrichtung und ein damit verbundenes Verfahren vorzuschlagen, welches erlaubt Leckagen mit kleinen Volumenströmen sowie Rohrbrüche mit grossen Volumenströmen in einem Leitungssystem zu erkennen.

Diese Aufgabe wird erfindungsgemäss mit einer Vorrichtung gemäß dem Anspruch 1 und einem Verfahren gemäß dem Anspruch 6 gelöst, wobei die Vorrichtung zwei Drucksensoren oder einen Differenzdrucksensor mit zwei Sensorelementen, eine Steuerung zur Auswertung der ermittelten Drücke der Sensoren oder der Sensorelemente aufweist, wobei ein Drucksensor oder ein Sensorelement vor dem Drosselelement primärseitig und der andere Sensor oder das andere Sensorelement nach dem Drosselelement sekundärseitig angeordnet ist und das Drosselelement in geöffneter Stellung ist wenn der Mediumsdruck vor dem Drosselelement grösser ist als der Mediumsdruck nach dem Drosselelement und dem Öffnungsschwellwert des Drosselelements zusammen, wobei das Drosselelement in geschlossener Stellung ist wenn der Druck kleiner ist als der Öffnungsschwellwert (p_{D}) des Drosselelements und dem vorherrschenden Mediumsdruck (p_{nach}) nach dem Drosselelement zusammen.

Wie die Aufgabe auch dadurch gelöst wird, dass mittels des Verfahrens primär- und sekundärseitig bzw. in dem vor und nach einem im Wasserleitungssystem angeordneten Drosselelement mit einem Öffnungsschwellenwert (po) der vorherrschende Mediumsdruck (pᵥₒᵣ, p_{nach}) ermittelt wird, wobei das Drosselelement geöffnet ist wenn der Mediumsdruck (pᵥₒᵣ) vor dem Drosselelement grösser ist als der Mediumsdruck (p_{nach}) nach dem Drosselelement und dem Öffnungsschwellwert (p_{D}) des Drosselelements zusammen (p_{nach tot}), wobei das Drosselelement geschlossen ist wenn der Mediumsdruck (pᵥₒᵣ) kleiner ist als der Öffnungsschwellwert (po) des Drosselelements und dem vorherrschenden Mediumsdruck (p_{nach}) nach dem Drosselelement zusammen, dadurch gekennzeichnet, dass ein Differenzdruck (Δp) (Δp = pᵥₒᵣ- p_{nach}) zwischen dem Mediumsdruck (pᵥₒᵣ) vor dem Drosselelement und dem Mediumsdruck (p_{nach}) nach dem Drosselelement ermittelt wird und aufgrund des ermittelten Differenzdrucks (Δp) auf einen zulässigen oder fehlerhaften Verbrauch des Mediums bzw. Wassers geschlossen werden kann.

Die erfindungsgemässe Vorrichtung dient einer Durchflussüberwachung in einem Leitungssystem vorzugsweise einem Trinkwasserleitungssystem wobei die Überwachung stromabwärts der Vorrichtung erfolgt. Die Vorrichtung beinhaltend ein Drosselelement, wobei sich das Drosselelement entsprechend dem Volumenstrom öffnet oder schliesst. Das heisst, das Drosselelement weist einen Öffnungsschwellwert auf, der vorzugsweise einer Federkraft die auf die Ventilsitzfläche wirkt entspricht. Die Vorrichtung weist zwei Drucksensoren oder einen Differenzdrucksensor mit zwei Sensorelementen auf, die es ermöglichen die vorherrschenden Mediumsdrücke zu ermitteln. Eine Steuerung die die Vorrichtung aufweist dient der Auswertung der ermittelten Drücke der Sensoren oder der Sensorelemente, wobei ein Drucksensor oder ein Sensorelement vor dem Drosselelement, primärseitig und der andere Sensor oder das andere Sensorelement nach dem Drosselelement, sekundärseitig angeordnet ist. Das heisst, bei komplett geschlossenem Leitungssystem und keiner Entnahme von Wasser an keiner Entnahmestelle bzw. an keinem Verbraucher, sind die Mediumsdrücke vor dem Drosselelement und nach dem Drosselelement gleich wenn kein Leck vorhanden ist bis auf kleine Schwankungen, da auch kein Volumenstrom fliesst und das Drosselelement in geschlossener Stellung ist. Das Drosselelement ist in geöffneter Stellung wenn der Mediumsdruck vor dem Drosselelement grösser ist als der Mediumsdruck nach dem Drosselelement und dem Öffnungsschwellwert des Drosselelements zusammen, das kann sein leicht oder auch weit geöffnet abhängig vom Volumenstrom bzw. Differenzdruck der vorherrscht. Dies ist der Fall wenn z. B. bei einer Entnahmestelle Wasser entnommen wird, was den Druck nach dem Drosselelement reduziert und somit den kompletten Druck nach dem Drosselelement, bestehend aus dem Öffnungsschwellwert der konstant ist und dem Mediumsdruck nach dem Drosselelement, verringert. Wenn der komplette Druck nach dem Drosselelement, aufgrund des reduzierten Mediumsdrucks nach dem Drosselelement, den Druck vor dem Drosselelement unterschreitet hebt sich das Drosselelement vom Ventilsitz ab und ein Durchströmen des Ventilsitzes bzw. Ventils findet statt. Das Drosselelement ist so lange geschlossen solang der Mediumsdruck vor dem Drosselelement kleiner ist als der Öffnungsschwellwert des Drosselelements und dem vorherrschenden Mediumsdruck nach dem Drosselelement zusammen respektive so lange bis der Differenzdruck den Öffnungsschwellwert überschreitet. Verringert sich der Mediumsdruck nach dem Drosselelement derart, dass der Mediumsdruck vor dem Drosselelement den kompletten Druck aus Mediumsdruck nach dem Drosselelement und dem Öffnungsschwellwert des Drosselelements überschreitet öffnet sich das Ventil bzw. das Drosselelement hebt sich vom Ventilsitz ab.

Vorzugsweise ist das Drosselelement als Rückschlagelement ausgebildet und öffnet und schliesst sich aufgrund der Mediumsdrücke vor und nach dem Rückschlagelement. Als vorteilhaft hat sich auch gezeigt, wenn das Rückschlagelement ein Federelement aufweist mit dem eine Federkraft auf das Rückschlagelement ausgeübt wird, entsprechend der, das Rückschlagelement auf den Ventilsitz bzw. die Ventilsitzfläche gepresst wird bzw. den Öffnungsschwellwert bildet. Der Öffnungsschwellwert wird aufgrund der Federkraft des Federelements auf die Ventilsitzfläche definiert.

Die Vorrichtung weist vorzugsweise ein Gehäuse auf, das vorzugsweise als Ventilgehäuse ausbildet ist und einen Ventilsitz aufweist. Zudem ist es zu bevorzugen, wenn das Drosselelement und die Sensoren bzw. Sensorelemente im selben Gehäuse angeordnet sind, dies gewährleistet eine bessere Dichtheit der Vorrichtung sowie eine kompakte Bauform. Vorteilhaft ist es, wenn das Gehäuse als Gussteil ausgebildet ist.

Als vorteilhaft hat sich gezeigt, wenn das Drosselelement als Schrägsitzventilkörper ausgebildet ist, welches ein Federelement aufweist. Vorzugsweise weist die Vorrichtung ein Schrägsitzventil in welchem die Sensoren bzw. Sensorelemente im Ventilgehäuse angeordnet sind sowie der Schrägsitzventilkörper. Selbstverständlich würde auch ein anderes Ventil wie ein Geradsitzventil dazu einsetzbar sein.

Es hat sich als vorteilhaft erwiesen, wenn die Vorrichtung einen Wasserzähler aufweist, wobei der Wasserzähler vorzugsweise vor dem Drosselelement und den Sensoren bzw. Sensorelementen angeordnet ist.

Gemäss einer bevorzugten Ausführungsform weist die Vorrichtungen einen Antrieb auf mit welchem das Drosselelement betätigbar ist um beispielsweise komplett zu schliessen. Selbstverständlich wird das Drosselelement auch mit Antrieb immer noch durch die vorherrschenden Drücke geregelt und der Antrieb würde beispielsweise dazu dienen, dass bei einem festgestellten Leck in der Leitung das Drosselelement in Schliessstellung gebracht werden könnte. Alternativ könnte auch ein separates Ventil an der Vorrichtung angeordnet sein, welches unabhängig vom Drosselelement den Durchfluss des Mediums unterbinden könnte, wobei das Ventil angetrieben wie auch manuell betätigbar vorstellbar ist.

Der Antrieb ist vorzugsweise durch einen Elektromotor oder pneumatischen Antrieb ausgebildet.

Das vorliegenden Verfahren zeichnet sich dadurch aus, dass zur Durchflussüberwachung in einem Leitungssystem vorzugsweise zum Ermitteln einer Leckage in einem Trinkwasserleitungssystem, primär- und sekundärseitig bzw. vor und nach einem im Wasserleitungssystem angeordneten Drosselelement mit einem Öffnungsschwellenwert der vorherrschende Mediumsdruck ermittelt wird. Das Drosselelement ist in geöffneter Stellung wenn der Mediumsdruck vor dem Drosselelement grösser ist als der Mediumsdruck nach dem Drosselelement und dem Öffnungsschwellwert des Drosselelements zusammen. Das Drosselelement ist in geschlossener Stellung, wenn der Mediumsdruck vor dem Drosselelement kleiner ist als der Öffnungsschwellwert des Drosselelements und dem vorherrschenden Mediumsdruck nach dem Drosselelement zusammen. Um auf eine Leckage bzw. fehlerhaften Verbrauch zu schliessen wird ein Differenzdruck zwischen dem Mediumsdruck vor dem Drosselelement und dem Mediumsdruck nach dem Drosselelement ermittelt, aufgrund des ermittelten Differenzdrucks kann auf einen zulässigen oder fehlerhaften Verbrauch des Mediums bzw. Wassers geschlossen werden, wobei hierzu vorzugsweise der ermittelte Differenzdruck mit Differenzdruckwerten abgeglichen wird die der Steuerung hinterlegt sind und die es ermöglichen den ermittelten Differenzdruck entsprechend als zulässigen oder fehlerhaften Verbrauch zu werten. Ein entsprechender Hinweis kann durch eine Meldung der Steuerung erfolgen, es kann aber auch ein automatisches Absperren mittels eines automatischen Ventils erfolgen, wenn die Steuerungen der einzelnen Vorrichtungen und Ventile die am Leitungssystem angeordnet sind oder zumindest einige davon untereinander kommunizieren.

Es besteht auch die Möglichkeit eine Warnmeldung an ein Benutzer-Endgerät zu senden aufgrund der eine manuelle Überprüfung oder Sperrung des Leitungssystems erfolgen kann.

Es hat sich als vorteilhaft gezeigt, wenn die Ermittlung eines zulässigen oder fehlerhaften Verbrauchs aufgrund des ermittelten Differenzdrucks, welcher in Abhängigkeit des Volumenstroms vorherrscht, erfolgt. In der Regel weisen solche Vorrichtungen mit einem Drosselelement aufgrund ihrer Bauform und Grösse Nenndurchmesser spezifische Strömungskennlinien auf, aufgrund derer bei einem bestimmten Volumenstrom ein bestimmter Differenzdruck gegeben ist.

Als vorteilhafte Ausgestaltung hat sich gezeigt, wenn die Ermittlung eines zulässigen oder fehlerhaften Verbrauchs aufgrund des ermittelten Differenzdrucks über eine bestimmte Zeitspanne erfolgt. Das heisst, ermittelt die Steuerung einen Differenzdruck überprüft die Steuerung wie lange dieser Differenzdruck über dem Drosselelement vorherrscht. Aufgrund dessen ob eine vorgegebene Zeitspanne in Bezug auf den ermittelten Differenzdruck überschritten wird oder nicht liegt ein zulässiger oder fehlerhafter Verbrauch vor.

Vorzugsweise wird beim Überschreiten einer vorgegebenen Zeitspanne bei einem entsprechenden Differenzdruck ein fehlerhafter Verbrauch des Mediums bzw. Wassers festgestellt. Die Anzeige einer solchen Feststellung eines fehlerhaften Verbrauchs kann beispielsweise durch einen Hinweis der Steuerung oder auf ein Benutzer-Endgerät wie beispielsweise ein Tablet oder Handy erfolgen aber es kann auch direkt mittels einer Absperrung eines Ventils oder auch des Drosselelements der erfindungsgemässen Vorrichtung erfolgen, die über die Steuerung miteinander kommunizieren.

Als vorteilhafte Ausgestaltung hat sich gezeigt, wenn die Ermittlung eines zulässigen oder fehlerhaften Verbrauchs aufgrund des ermittelten Differenzdrucks (Δp) und einer Detektion an den Verbrauchern erfolgt, wobei an den Verbrauchern vorzugsweise der Durchfluss oder die Betätigung des Verbrauchers detektiert wird. Die Steuerung erfasst den Differenzdruck und vergleicht ob in derselben Zeitspanne ein Verbrauch an mindestens einem Verbraucher stattgefunden hat. Dies kann dadurch erfolgen, dass an den Verbrauchern Durchflusssensoren angeordnet sind, die einen Durchfluss erfassen oder Bewegungsmelder, die eine Bewegung des Verbrauchers feststellen, beispielsweise bei der Betätigung eines Wasserhahns eine Bewegung des Hahns. Stellt die Steuerung nun einen Differenzdruck (Δp) fest und es liegt keine Bewegung oder kein Volumenstrom an einem Verbrauch vor, wird ein fehlerhafter Verbrauch ausgewiesen. Vorteilhaft ist es, wenn auch das wiederum mit einer Zeitspanne verknüpft ist, indem die vorherrschenden Umstände erst beim Überschreiten einer gewissen Zeitspanne als Fehlverbrauch ausgewiesen werden.

Als weitere alternative Ausgestaltung besteht die Möglichkeit, dass die Ermittlung eines zulässigen oder fehlerhaften Verbrauchs aufgrund des ermittelten Differenzdrucks (Δp) und einer Detektion in den Abflüssen erfolgt, beispielsweise mittels eines Sensors in den Abflüssen, wobei die Abflüsse entsprechend bei den Verbrauchen angeordnet sind und dadurch einen Durchfluss im Abschluss erkennt. Erkennt der Sensor keinen Durchfluss in den Abflüssen und es liegt aber ein Differenzdruck (Δp) zwischen dem Druck primär- und sekundärseitig vor, wird ein fehlerhafter Verbrauch festgestellt, wobei auch dieser vorzugsweise über eine Zeitspanne verknüpft wird, so dass dieser Zustand erst nach einer überschrittenen Zeitspanne als Fehlverbrauch eingestuft wird.

Es ist vorteilhaft, wenn die Differenzdrücke in unterschiedliche Bereiche eingeteilt werden, vorzugsweise in "kein Zapfbetrieb", "normaler Zapfbetrieb", "mehrfacher Zapfbetrieb" und "Rohrbruch". Selbstverständlich können auch andere wie auch weitere Einteilungen erfolgen. Beispielsweise liegt der Bereich "kein Zapfbetrieb" zwischen 0 und den zulässigen Schwankungen (Δp_{zul}) des Differenzdrucks, welche leicht unter dem Öffnungsschwellwert (Δp_{D}) liegen. Dies sind Schwankungen im Leitungssystem und Medium aufgrund derer kein Leck und somit kein Anlass zur Feststellung eines fehlerhaften Verbrauchs vorliegt. Als weiteren Bereich des Differenzdrucks kann vorzugsweise der Bereich "normaler Zapfbetrieb" angegeben werden, der beispielsweise von der Differenzdruckgrenze (Δp_{zul}) der zulässigen Schwankungen bis zu einer Differenzdruckgrenze (Δp_{N}) die in etwa im Leitungssystem auftritt, wenn an einer Entnahmestelle gezapft wird. Als weiteren Bereich des Differenzdrucks kann der Differenzdruck angesehen werden, der entsteht wenn an mehreren Entnahmestellen gleichzeitig Wasser entnommen wird, dieser reicht von der Differenzdruckgrenze (Δp_{N}) bis zur Differenzdruckgrenze (Δp_{M}) "mehrfacher Zapfbetrieb". Alles was einen höheren Differenzdruck verursacht würde einem Rohrbruch entsprechen und somit würde bei der Feststellung einer Überschreitung der Differenzdruckgrenze (Δp_{M}) "mehrfacher Zapfbetrieb" ein Rohrbruch festgestellt werden, was einen Hinweis oder eine Absperrung zu Folge hätte.

Als vorteilhaft hat sich gezeigt, dass den verschiedenen Bereichen Zeitspannen zugeteilt sind, wobei beim Überschreiten der entsprechenden Zeitspanne ein fehlerhafter Verbrauch festgestellt wird. Das heisst, dass beispielsweise im Differenzdruckbereich "normaler Zapfbereich" der zwischen der Differenzdruckgrenze (Δp_{zul}) "zulässige Schwankungen" bis hin zur Differenzdruckgrenze (Δp_{N}) des normalen Zapfbereichs reicht eine Zeitspanne t zugeordnet ist und wenn diese überschritten wird, wird ein fehlerhafter Verbrauch festgestellt. Die Zeitspanne kann für jeden Bereich separat definiert werden. Vorzugsweis erfolgt beim Überschreiten der Differenzdruckgrenze (Δp_{M}) "mehrfacher Zapfbetrieb" und der demzufolge Feststellung eines Rohrbruchs ein sofortiger Hinweis oder eine umgehende Absperrung.

Der grosse Vorteil dieses Verfahrens liegt darin, dass bereits ein minimaler Volumenstrom, der nach dem Drosselelement fliesst bzw. sekundärseitig, ein derart grosser Differenzdruck angezeigt wird, dass der Differenzdruck von den Sensoren sofort erkannt wird. Fliesst somit ein sehr geringer Volumenstrom oder sogar nur einzelne Tropfen die in der Wand versickern, wird ein Differenzdruck angegeben der über den zulässigen Schwankungen liegt, da der kleinste Strom einen schlagartigen Anstieg des Differenzdrucks auslöst.

Als alternative Ausgestaltungsmöglichkeit vorzugsweise zur besseren Erfassung ob eine zulässige Schwankung vorliegt oder der vorliegende geringe Differenzdruck bereits aufgrund eines Lecks besteht, kann mittels Temperatursensoren im Leitungssystem festgestellt werden. Liegen Temperaturschwankungen vor lässt die Vorrichtung bzw. das Verfahren einen geringen Differenzdruck zu ohne einen Fehlverbrauch festzustellen, wobei der zulässige Differenzdruck abhängig von den vorliegenden Temperaturen und der vorliegenden Wassermenge im Leitungssystem ist. Liegen keine Temperaturschwankungen vor, lässt die Vorrichtung bzw. das Verfahren keinen Differenzdruck zu ohne nicht einen Fehlverbrauch zu erkennen, wobei auch dies wiederum mit einer Abhängigkeit einer Überschreitung einer vorgegeben Zeitspanne verknüpft werden kann.

Alle Ausgestaltungmöglichkeiten sind untereinander frei kombinierbar sowie die Vorrichtungsmerkmale und die Verfahrensmerkmal frei kombinierbar sind.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine Draufsicht einer erfindungsgemässen Vorrichtung mit einem Teilschnitt durch ein Schrägsitzventil,
- Fig. 2: ein Diagramm zur Darstellung des Differenzdrucks Δp in Abhängigkeit des Volumenstroms,
- Fig. 3: eine Draufsicht einer erfindungsgemässen Vorrichtung mit einem Teilschnitt durch ein Geradsitzventil,
- Fig. 4: eine Draufsicht einer erfindungsgemässen Vorrichtung mit einem Geradsitzventil und
- Fig. 5: eine Draufsicht einer erfindungsgemässen Vorrichtung mit einem Schrägsitzventil, wobei die Sensoren ausserhalb des Gehäuses des Schrägsitzventils angeordnet sind.

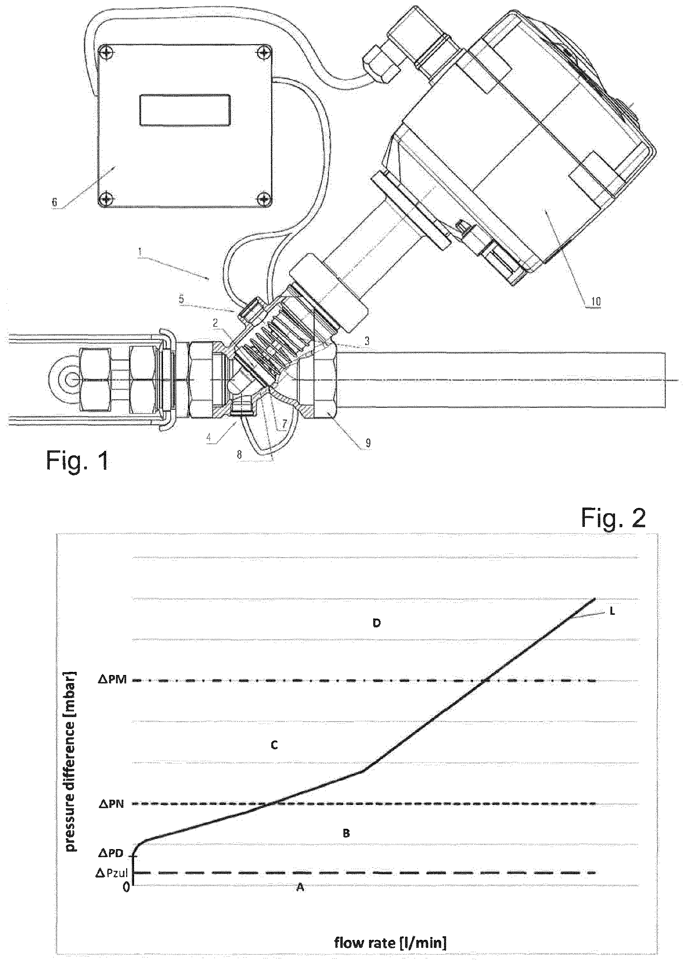

Die in Fig. 1 dargestellte Zeichnung zeigt eine erfindungsgemässe Vorrichtung 1 zur Durchflussüberwachung in einem Leitungssystem vorzugsweise einem Trinkwasserleitungssystem. Die Vorrichtung 1 beinhaltet ein variables Drosselelement 2, das einen Öffnungsschwellwert p_{D} aufweist, wobei der Öffnungsschwellwert p_{D} aufgrund eines Federelements 3, das eine Federkraft auf das Drosselelement 2 aufbringt und diese auf die Ventilsitzfläche 7 wirkt, entsteht. Die Vorrichtung 1 weist zwei Drucksensoren 4, 5 oder einen Differenzdrucksensor mit zwei Sensorelementen 4, 5 auf. Der eine Sensor 4 ist vor dem Drosselelement 2 also primärseitig angeordnet und der andere Sensor 5 nach dem Drosselelement 2 also sekundärseitig. Die Vorrichtung 1 weist zudem eine Steuerung 6 auf, welche den Differenzdruck ermittelt. Wobei die Steuerung 6 der Vorrichtung 1 mit weiteren Steuerungen anderer Vorrichtungen oder Ventilen kommunizieren kann oder auch mit Benutzer-Endgeräten wie Tablets, Computer oder auch Handys, dazu weisen das Steuergerät vorzugsweise eine Kommunikationseinheit auf. In der abgebildeten Ausführungsform ist das Drosselelement 2 als Rückschlagelement bzw. als Schrägsitzventilkörper ausgebildet wobei auch andere Drosselelemente dazu geeignet sind. Das Drosselelement 2 und die Sensoren 4, 5 sind im selben Gehäuse 8 angeordnet, wobei das Gehäuse vorzugsweise als Gussteil ausgebildet ist. Es hat sich als vorteilhaft gezeigt, dass aufgrund der Einbaumasse und Zugänglichkeit ein Schrägsitzventil 9 in der Vorrichtung 1 eingesetzt wird und dieses mit zwei Sensoren 4, 5 jeweils primär- und sekundärseitig angeordnet versehen wird. Selbstverständlich sind auch Geradsitzventile wie andere Ventile die den Durchfluss abhängig vom Volumenstrom regeln dazu einsetzbar. In der in Fig. 1 dargestellten Ausführungsform weist die Vorrichtung 1 noch einen Antrieb 10 auf. Dieser dient dazu, dass beim Feststellen eines fehlerhaften Verbrauchs das Drosselelement 2 dazu verwendet werden kann die Leitung abzusperren. Es sind aber auch andere Absperrmöglichkeiten denkbar wie beispielsweise separate Ventile die am Leitungssystem angeordnet sind, welche ebenfalls über die Steuerung betätigbar sind oder manuell und diese Betätigung aufgrund eines Hinweises der Steuerung an den Benutzer erfolgt.

Fig. 2 zeigt ein Diagramm, welches den Zusammenhang zwischen dem auftretenden Differenzdruck [mbar] und dem Volumenstrom [l/min] in einer erfindungsgemässen Vorrichtung 1 darstellt, wobei in Fig. 2 die Kennlinie eines bestehenden Schrägsitzventils als Vorlage aufgezeigt wird das in der Vorrichtung 1 eingesetzt wird. Die Kennlinie L zeigt den Differenzdruck über dem Drosselelement 2 also den Druck vor und nach dem Drosselelement 2 bzw. primär- und sekundärseitig in Abhängigkeit des Volumenstroms. Die Kennlinien L sind nenndurchmesserspezifisch, das heisst, jedes Ventil, somit jede Vorrichtung mit einem bestimmten Nenndurchmesser hat eine spezifische Kennlinie L. Im Diagramm sind die beispielhaft unterschiedlichen Bereiche angegeben, der Bereich "kein Zapfbetrieb" A liegt zwischen 0 und der Differenzdruckgrenze Δp_{zul} "zulässige Schwankungen", wobei die Differenzdruckgrenze Δp_{zul} vorzugsweise leicht unterhalb des Öffnungsschwellwerts p_{D} liegt. Der Bereich B "normaler Zapfbetrieb" liegt zwischen der Differenzdruckgrenze Δp_{zul} "zulässige Schwankungen" und der Differenzdruckgrenze Δp_{N} "normaler Zapfbetrieb" dies ist der Differenzdruckbereich der vorherrscht wenn an einer Entnahmestelle bzw. an einem Verbraucher Wasser entnommen wird in Abhängigkeit des Volumenstroms der dann fliesst. Ein weiterer Bereich ist der Bereich C "mehrfacher Zapfbetrieb" der erstreckt sich zwischen der Differenzdruckgrenze Δp_{N} "normaler Zapfbetrieb" und der Differenzdruckgrenze Δp_{M} "mehrfacher Zapfbetrieb". Alles was oberhalb der Differenzdruckgrenze Δp_{M} liegt wird als Rohrbruch erkannt und fällt in den Bereich D "Rohrbruch". Selbstverständlich können auch andere Bereichseinteilungen wie auch Differenzdruckgrenzwerte verwendet werden.

Liegt nun der Differenzdruck Δp im Bereich A " kein Zapfbetrieb" sind dass auftretende Schwankungen im Leitungssystem aufgrund der keine Meldung der Steuerung erfolgt, dass ein fehlerhafter Verbrauch vorliegt. Ermittelt sind die Steuerung 10 aufgrund der von den Sensoren 4, 5 ermittelte Druck einen Differenzdruck Δp im Bereich B "normaler Zapfbetrieb" wird erfasst wie lange bzw. über welche Zeitspanne t dieser Zapfbetrieb B andauert. Hält dieser Differenzdruck beispielsweise über eine Zeitspanne t von mehreren Tagen konstant ohne Unterbruch an, meldet die Steuerung einen fehlerhaften Verbrauch. Liegt beispielsweise ein Differenzdruck Δp im Bereich C "mehrfacher Zapfbetrieb" vor und der dauert über eine Zeitspanne t von mehreren Stunden konstant an, gibt auch hier die Steuerung eine Meldung eines fehlerhaften Verbrauchs. Beispielsweise beim Überschreiten der Differenzdruckgrenze Δp_{M} "mehrfacher Zapfbetrieb" welches dann einen Differenzdruck Δp im Bereich D "Rohrbruch" darstellt könnte auch eine direkte Absperrung der Leitung erfolgen. Alle diese Meldungen und die Möglichkeit zum Absperren sind frei untereinander kombinierbar wie auch frei den Bereichen und den Zeitspannen, die ebenfalls individuell anpassbar sind, zuordenbar. Im Diagramm ist sehr gut erkennbar, dass der kleinste, kaum erkennbare Volumenstrom bereits einen hohen Ausschlag im Differenzdruck Δp erzeugt, dies wird in diesem Verfahren zunutze gemacht. Somit wird bereits eine kleine Leckage in der Leitung erkannt, da nur geringe Tropfen einen Differenzdruck Δp erzeugen, der im Bereich B "normaler Zapfbetriebt" vorliegt und aufgrund einer vorgegeben zulässigen Zeitspanne t für diesen Differenzdruck Δp beim Überschreiten dieser ein fehlerhaften Verbrauch festgestellt wird.

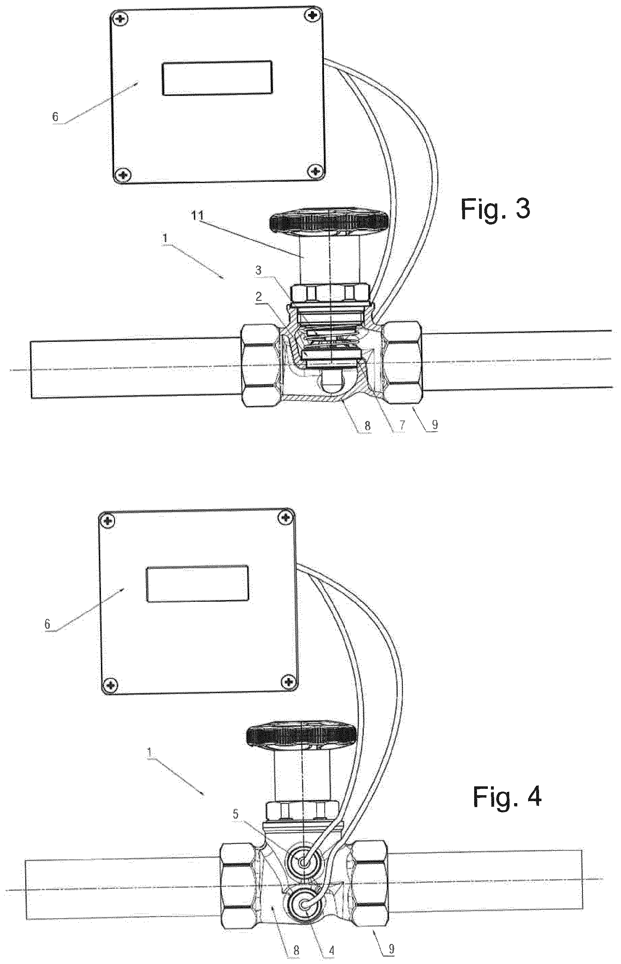

Fig. 3 zeigt eine alternative Ausgestaltung einer erfindungsgemässen Vorrichtung 1 bei der ein Geradsitzventil 9 eingesetzt wird um den Durchfluss zu regeln. Als alternative Variante wird zum möglichen Absperren hier ein Handrad 11 dargestellt, wobei auch hier ein elektrischer oder pneumatischer Antrieb 10 einsetzbar wäre der das Ventil automatisch absperren würde.

Mittels des Handrads 11 kann manuell das Ventil geschlossen werden falls z. B. ein Hinweis auf eine Leckage durch die Steuerung erfolgt. Fig. 4 zeigt die Draufsicht in der die Sensoren 4, 5 bzw. ihre Einbaulage besser erkennbar sind.

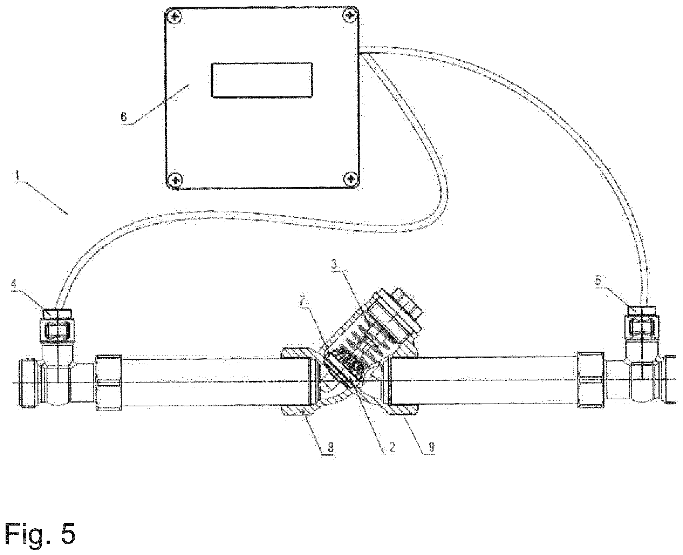

Fig. 5 zeigt eine weitere Ausgestaltungsmöglichkeit der erfindungsgemässen Vorrichtung 1, wobei die Sensoren 4, 5 in einem separaten Gehäuse angeordnet sind und nicht in demselben indem sich auch das Drosselelement 2 befindet, jedoch auch hier ist ein Sensor 4 primärseitig und der andere Sensor 5 sekundärseitig angeordnet. Zudem ist hier wiederum eine alternative Bauweise eines Ventils 9 abgebildet das keine Betätigungsmöglichkeit wie Handrad oder Antrieb aufweist. Eine Absperrung der Leitung kann hier an einer anderen Stelle im Leitungssystem erfolgen oder gar nicht und die Absperrung kann nur am Haupthahn vorgenommen werden.

### Bezugszeichenliste

- 1: Vorrichtung
- 2: Drosselelement
- 3: Federelement
- 4: Drucksensor oder Sensorelement primärseitig
- 5: Drucksensor oder Sensorelement sekundärseitig
- 6: Steuerung
- 7: Ventilsitz / Ventilsitzfläche
- 8: Gehäuse
- 9: Schrägsitzventil / Geradsitzventil
- 10: Antrieb
- 11: Handrad

- A: kein Zapfbetrieb
- B: normaler Zapfbereich
- C: mehrfacher Zapfbereich
- D: Rohrbruch

- Δp_{zul}: zulässige Schwankungen
- Δp_{D}: Öffnungsschwellwert Drosselelement
- Δp_{N}: Differenzdruckgrenze für normaler Zapfbereich
- Δp_{M}: Differenzdruckgrenze für mehrfacher Zapfbereich
- L: Kennlinie Schrägsitzventil
- pᵥₒᵣ: Mediumsdruck vor Drosselelement / primärseitig
- p_{nach}: Mediumsdruck nach Drosselelement / sekundärseitig
- p_{nach tot}: Mediumsdruck nach Drosselelement und Öffnungsschwellwert

## Patentansprüche

1. Vorrichtung (1) zur Durchflussüberwachung in einem Leitungssystem, vorzugsweise einem Trinkwasserleitungssystem, beinhaltend ein Drosselelement (2), wobei sich das Drosselelement (2) entsprechend dem Volumenstrom öffnet oder schliesst, wobei das Drosselelement (2) einen Öffnungsschwellwert p_{D} aufweist, **dadurch gekennzeichnet, dass** die Vorrichtung (1) zwei Drucksensoren (4, 5) oder einen Differenzdrucksensor mit zwei Sensorelementen (4, 5), eine Steuerung (6) zur Auswertung der ermittelten Drücke der Sensoren (4, 5) oder der Sensorelemente (4, 5) aufweist, wobei ein Drucksensor (4) oder ein Sensorelement (4) vor dem Drosselelement primärseitig und der andere Sensor (5) oder das andere Sensorelement (5) nach dem Drosselelement (2) sekundärseitig angeordnet ist und das Drosselelement (2) in geöffneter Stellung ist wenn der Mediumsdruck (pᵥₒᵣ) vor dem Drosselelement (2) grösser ist als der Mediumsdruck (p_{nach}) nach dem Drosselelement (2) und dem Öffnungsschwellwert (p_{D}) des Drosselelements (2) zusammen (p_{nach tot}), wobei das Drosselelement (2) in geschlossener Stellung ist wenn der Druck (pᵥₒᵣ) kleiner ist als der Öffnungsschwellwert (po) des Drosselelements (2) und dem vorherrschenden Mediumsdruck (p_{nach}) nach dem Drosselelement (2) zusammen, **dadurch gekennzeichnet, dass** das Drosselelement (2) als Schrägsitzventilkörper mit Federelement (3) oder als Geradsitzventil ausgebildet ist.

2. Vorrichtung (1) nach Anspruch 1 **dadurch gekennzeichnet, dass** das Drosselelement (2) als Rückschlagelement ausgebildet ist.

3. Vorrichtung (1) nach einem der Ansprüche 1 oder 2, **dadurch gekennzeichnet, dass** das Drosselelement (2) und die Sensoren (4, 5) oder Sensorelement (4, 5) im selben Gehäuse (8) angeordnet sind.

4. Vorrichtung (1) nach einem der Ansprüche 1 bis 3, **dadurch gekennzeichnet, dass** die Vorrichtung (1) ein Wasserzähler aufweist, wobei der Wasserzähler vorzugsweise vor dem Drosselelement (2) und den Sensoren (4, 5) angeordnet ist.

5. Vorrichtung (1) nach einem der Ansprüche 1 bis 4, **dadurch gekennzeichnet, dass** das Drosselelement (2) durch einen Antrieb betätigbar ist um es beispielsweise komplett zu schliessen, vorzugsweise durch einen Elektromotor (10), einen pneumatischen Antrieb (10) oder ein manuell betätigbares Handrad (11).

6. Verfahren zur Durchflussüberwachung in einem Leitungssystem vorzugsweise zum Ermitteln einer Leckage in einem Trinkwasserleitungssystem, mit einer Vorrichtung nach einem der Ansprüche 1 bis 5, in dem vor und nach einem im Wasserleitungssystem angeordneten Drosselelement mit einem Öffnungsschwellenwert (po) der vorherrschende Mediumsdruck (pᵥₒᵣ, p_{nach}) ermittelt wird, wobei das Drosselelement in geöffneter Stellung ist wenn der Mediumsdruck (pᵥₒᵣ) vor dem Drosselelement grösser ist als der Mediumsdruck (p_{nach}) nach dem Drosselelement und dem Öffnungsschwellwert (po) des Drosselelements zusammen (p_{nach tot}), wobei das Drosselelement in geschlossener Stellung ist wenn der Mediumsdruck (pᵥₒᵣ) vor dem Drosselelement kleiner ist als der Öffnungsschwellwert (po) des Drosselelements und dem vorherrschenden Mediumsdruck (p_{nach}) nach dem Drosselelement zusammen, **dadurch gekennzeichnet, dass** ein Differenzdruck (Δp) (Δp = pᵥₒᵣ-pᵥₒᵣ) zwischen dem Mediumsdruck (pᵥₒᵣ) vor dem Drosselelement und dem Mediumsdruck (p_{nach}) nach dem Drosselelement ermittelt wird und aufgrund des ermittelten Differenzdrucks (Δp) auf einen zulässigen oder fehlerhaften Verbrauch des Mediums bzw. Wassers geschlossen werden kann.

7. Verfahren nach Anspruch 6, **dadurch gekennzeichnet, dass** die Ermittlung eines zulässigen oder fehlerhaften Verbrauchs aufgrund des ermittelten Differenzdrucks (Δp), welche in Abhängigkeit des Volumenstroms vorherrscht, erfolgt.

8. Verfahren nach einem der Ansprüche 6 oder 7, **dadurch gekennzeichnet, dass** die Ermittlung eines zulässigen oder fehlerhaften Verbrauchs aufgrund des ermittelten Differenzdrucks (Δp) über eine bestimmte Zeitspanne t erfolgt.

9. Verfahren nach einem der Ansprüche 6 bis 8, **dadurch gekennzeichnet, dass** beim Überschreiten einer vorgegebenen Zeitspanne (t) bei einem entsprechenden Differenzdruck (Δp) ein fehlerhafter Verbrauch des Mediums bzw. Wassers festgestellt wird.

10. Verfahren nach einem der Ansprüche 6 bis 9, **dadurch gekennzeichnet, dass** die Ermittlung eines zulässigen oder fehlerhaften Verbrauchs aufgrund des ermittelten Differenzdrucks (Δp) und einer Detektion an den Verbrauchern erfolgt, wobei an den Verbrauchern vorzugsweise der Durchfluss oder die Betätigung des Verbrauchers detektiert wird.

11. Verfahren nach einem der Ansprüche 6 bis 9, **dadurch gekennzeichnet, dass** die Ermittlung eines zulässigen oder fehlerhaften Verbrauchs aufgrund des ermittelten Differenzdrucks (Δp) und einer Detektion in den Abflüssen erfolgt.

12. Verfahren nach einem der Ansprüche 6 bis 11, **dadurch gekennzeichnet, dass** die Differenzdrucke (Δp) in unterschiedliche Bereiche eingeteilt werden, vorzugsweise in kein Zapfbereich, Leck, normaler Zapfbereich, mehrfach Zapfbereich und Rohrbruch.

13. Verfahren nach Anspruch 12, **dadurch gekennzeichnet, dass** den Bereichen Zeitspannen (t) zugeteilt sind, wobei beim Überschreiten der Zeitspannen (t) ein fehlerhafter Verbrauch festgestellt wird.

## Claims

1. Device (1) for flow monitoring in a pipe system, preferentially a drinking water pipe system containing a throttle element (2), wherein the throttle element (2) opens or closes according to the volume flow, wherein the throttle element (2) has an opening threshold value p_{D}, **characterized in that** the device (1) comprises two pressure sensors (4, 5) or a differential pressure sensor with two sensor elements (4, 5), a control (6) for evaluating the determined pressures of the sensors (4, 5) or of the sensor elements (4, 5), wherein a pressure sensor (4) or a sensor element (4) is arranged before the throttle element on the primary side and the other sensor (5) or the other sensor element (5) after the throttle element (2) on the secondary side and the throttle element (2) is in the open position when the medium pressure (pᵥₒᵣ) before the throttle element (2) is greater than the medium pressure (p_{nach}) after the throttle element (2) and the opening threshold value (p_{D}) of the throttle element (2) together (p_{nachtot}), wherein the throttle element (2) is in the closed position when the pressure (pᵥₒᵣ) is lower than the opening threshold value (p_{D}) of the throttle element (2) and the prevailing medium pressure (p_{nach}) after the throttle element (2) together,
**characterized in that**
the throttle element (2) is configured as inclined seat valve body with spring element (3) or as straight seat valve.

2. Device (1) according to Claim 1,
**characterized in that**
the throttle element (2) is configured as non-return element.

3. Device (1) according to any one of the Claims 1 or 2,
**characterized in that**
the throttle element (2) and the sensors (4, 5) or sensor elements (4, 5) are arranged in the same housing (8).

4. Device (1) according to any one of the Claims 1 to 3,
**characterized in that**
the device (1) comprises a water meter, wherein the water meter is preferentially arranged before the throttle element (2) and the sensors (4, 5).

5. Device (1) according to any one of the Claims 1 to 4,
**characterized in that**
the throttle element (2) is actuatable by a drive in order to for example close it completely, preferentially by an electric motor (10), a pneumatic drive (10) or a manually actuatable hand wheel (11).

6. Method for flow monitoring in a pipe system preferentially for determining a leakage in a drinking water pipe system with a device according to any one of the Claims 1 to 5 in which before and after a throttle element arranged in the water pipe system, with an opening threshold value (p_{D}) the prevailing medium pressure (pᵥₒᵣ, p_{nach}) is determined, wherein the throttle element is in the open position when the medium pressure (pᵥₒᵣ) before the throttle element is greater than the medium pressure (p_{nach}) after the throttle element and the opening threshold value (p_{D}) of the throttle element together (p_{nachtot}), wherein the throttle element is in the closed position when the medium pressure (pᵥₒᵣ) before the throttle element is lower than the opening threshold value (p_{D}) of the throttle element and the prevailing medium pressure (p_{nach}) after the throttle element together,
**characterized in that**
a differential pressure (Δp) (Δp=pᵥₒᵣ-pᵥₒᵣ) between the medium pressure (pᵥₒᵣ) before the throttle element and the medium pressure (p_{nach}) after the throttle element is determined and based on the determined differential pressure (Δp) a permissible or faulty consumption of the medium or water can be concluded.

7. Method according to Claim 6,
**characterized in that** the determination of a permissible or faulty consumption takes place based on the determined differential pressure (Δp), which is present as a function of the volume flow.

8. Method according to any one of the Claims 6 or 7,
**characterized in that**
permissible or faulty consumption is determined based on the determined differential pressure (Δp) over a predetermined period of time (t).

9. Method according to any one of the Claims 6 to 8,
**characterized in that**
when a predetermined period of time (t) is exceeded at a corresponding differential pressure (Δp), a faulty consumption of the medium or water is determined.

10. Method according to any one of the Claims 6 to 9,
**characterized in that**
a permissible or faulty consumption is determined based on the determined differential pressure (Δp) and a detection at the consumers, wherein at the consumers preferentially the flow or the actuation of the consumer is detected.

11. Method according to any one of the Claims 6 to 9,
**characterized in that**
a permissible or faulty consumption is determined based on the determined differential pressure (Δp) and a detection in the outflows.

12. Method according to any one of the Claims 6 to 11,
**characterized in that**
the differential pressures (Δp) are divided into different ranges, preferentially into no tapping range, leak, normal tapping range, multiple tapping range and pipe burst.

13. Method according to Claim 12,
**characterized in that**
the ranges are assigned period of times (t), wherein when the period of times (t) are exceeded a faulty consumption is determined.

## Revendications

1. Dispositif (1) de surveillance du débit dans un système de conduite, de préférence un système de conduite d'eau potable contenant un élément d'étranglement (2), l'élément d'étranglement (2) s'ouvrant ou se fermant en fonction du débit volumétrique, l'élément d'étranglement (2) présentant une valeur de seuil d'ouverture p_{D}, **caractérisé en ce que** le dispositif (1) présente deux capteurs de pression (4, 5) ou un capteur de pression différentielle avec deux éléments capteurs (4, 5), une commande (6) pour évaluer les pressions déterminées des capteurs (4, 5) ou des éléments capteurs (4, 5), un capteur de pression (4) ou un élément capteur (4) étant agencé avant l'élément d'étranglement du côté primaire et l'autre capteur (5) ou l'autre élément capteur (5) étant agencé après l'élément d'étranglement (2) du côté secondaire, et l'élément d'étranglement (2) étant en position ouverte lorsque la pression de fluide (Pavant) avant l'élément d'étranglement (2) est supérieure à la pression de fluide (p_{après}) après l'élément d'étranglement (2) et à la valeur de seuil d'ouverture (p_{D}) de l'élément d'étranglement (2) combinées (p_{après tot}) , l'élément d'étranglement (2) étant en position fermée lorsque la pression (pₐᵥₐₙₜ) est inférieure à la valeur de seuil d'ouverture (p_{D}) de l'élément d'étranglement (2) et à la pression de fluide prédominante (p_{après}) après l'élément d'étranglement (2) combinées, **caractérisé en ce que** l'élément d'étranglement (2) est configuré sous forme de corps de soupape à siège incliné avec un élément à ressort (3) ou sous forme de soupape à siège droit.

2. Dispositif (1) selon la revendication 1, **caractérisé en ce que** l'élément d'étranglement (2) est configuré sous forme d'élément anti-retour.

3. Dispositif (1) selon l'une quelconque des revendications 1 ou 2, **caractérisé en ce que** l'élément d'étranglement (2) et les capteurs (4, 5) ou l'élément capteur (4, 5) sont agencés dans le même boîtier (8).

4. Dispositif (1) selon l'une quelconque des revendications 1 à 3, **caractérisé en ce que** le dispositif (1) présente un compteur d'eau, le compteur d'eau étant de préférence agencé avant l'élément d'étranglement (2) et les capteurs (4, 5).

5. Dispositif (1) selon l'une quelconque des revendications 1 à 4, **caractérisé en ce que** l'élément d'étranglement (2) peut être actionné par un entraînement afin de le fermer complètement par exemple, de préférence par un moteur électrique (10), un entraînement pneumatique (10) ou un volant (11) actionnable manuellement.

6. Procédé de surveillance du débit dans un système de conduite, de préférence pour déterminer une fuite dans un système de conduite d'eau potable, avec un dispositif selon l'une quelconque des revendications 1 à 5, dans lequel la pression de fluide prédominante (pₐᵥₐₙₜ, p_{après}) est déterminée avant et après un élément d'étranglement ayant une valeur de seuil d'ouverture (p_{D}) , agencé dans le système de conduite d'eau, l'élément d'étranglement étant en position ouverte lorsque la pression de fluide (pₐᵥₐₙₜ) avant l'élément d'étranglement est supérieure à la pression de fluide (p_{après}) après l'élément d'étranglement et à la valeur de seuil d'ouverture (p_{D}) de l'élément d'étranglement combinées (p_{après tot}) , l'élément d'étranglement étant en position fermée lorsque la pression de fluide (pₐᵥₐₙₜ) avant l'élément d'étranglement est inférieure à la valeur de seuil d'ouverture (p_{D}) de l'élément d'étranglement et à la pression de fluide prédominante (p_{après}) après l'élément d'étranglement combinées, **caractérisé en ce qu'**une pression différentielle (Δp) (Δp = pₐᵥₐₙₜ - pₐᵥₐₙₜ) est déterminée entre la pression de fluide (pₐᵥₐₙₜ) avant l'élément d'étranglement et la pression de fluide (p_{après}) après l'élément d'étranglement, et, sur la base de la pression différentielle (Δp) déterminée, une consommation admissible ou incorrecte du fluide ou de l'eau peut être déduite.

7. Procédé selon la revendication 6, **caractérisé en ce que** la détermination d'une consommation admissible ou incorrecte s'effectue sur la base de la pression différentielle (Δp) déterminée qui prédomine en fonction du débit volumétrique.

8. Procédé selon l'une quelconque des revendications 6 ou 7, **caractérisé en ce que** la détermination d'une consommation admissible ou incorrecte s'effectue sur la base de la pression différentielle (Δp) déterminée sur une période de temps t déterminée.

9. Procédé selon l'une quelconque des revendications 6 à 8, **caractérisé en ce qu'**une consommation incorrecte du fluide ou de l'eau est constatée en cas de dépassement d'une période de temps prédéfinie (t) à une pression différentielle (Δp) correspondante.

10. Procédé selon l'une quelconque des revendications 6 à 9, **caractérisé en ce que** la détermination d'une consommation admissible ou incorrecte s'effectue sur la base de la pression différentielle (Δp) déterminée et d'une détection au niveau des consommateurs, le débit ou l'actionnement du consommateur étant de préférence détecté au niveau des consommateurs.

11. Procédé selon l'une quelconque des revendications 6 à 9, **caractérisé en ce que** la détermination d'une consommation admissible ou incorrecte s'effectue sur la base de la pression différentielle (Δp) déterminée et d'une détection dans les évacuations.

12. Procédé selon l'une quelconque des revendications 6 à 11, **caractérisé en ce que** les pressions différentielles (Δp) sont classées en différentes plages, de préférence en aucune plage de soutirage, fuite, plage de soutirage normale, plage de soutirage multiple et rupture de canalisation.

13. Procédé selon la revendication 12, **caractérisé en ce que** des périodes de temps (t) sont attribuées aux plages, une consommation incorrecte étant constatée lorsque les périodes de temps (t) sont dépassées.
